(19) Europäisches Patentamt
European Patent Office
Office européen des brevets

(11) Veröffentlichungsnummer: **0 235 536 B1**

(12) # EUROPÄISCHE PATENTSCHRIFT

(45) Veröffentlichungstag der Patentschrift: **23.05.90**

(51) Int. Cl.[5]: **F17D 1/17**
// B01F17/00, C10L1/32

(21) Anmeldenummer: **87100832.2**

(22) Anmeldetag: **22.01.87**

(54) **Verfahren zum Transport von Schwerölen.**

(30) Priorität: **05.03.86 DE 3607090**

(43) Veröffentlichungstag der Anmeldung:
**09.09.87 Patentblatt 87/37**

(45) Bekanntmachung des Hinweises auf die Patenterteilung:
**23.05.90 Patentblatt 90/21**

(84) Benannte Vertragsstaaten:
**DE FR IT NL**

(56) Entgegenhaltungen:
**EP-A- 0 058 371**
**EP-A- 0 175 879**
**US-A- 4 246 919**

(73) Patentinhaber: **HÜLS AKTIENGESELLSCHAFT, Patentabteilung / PB 15 - Postfach 13 20, D-4370 Marl 1(DE)**

(72) Erfinder: **Balzer, Dieter, Dr., Talstrasse 21, D-4358 Haltern(DE)**

EP 0 235 536 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Schweröle und Schwerstöle lassen sich unter Bedingungen üblicher Außentemperaturen infolge ihrer sehr hohen Viskosität nur schwierig in Rohrleitungen transportieren. Zur Erhöhung ihrer Mobilität werden sie daher vielfach mit niedrigviskosen Rohölen oder Raffinerieschnitten vermischt; eine solche Arbeitsweise erfordert relativ hohe Zusätze, um eine merkliche Fließverbesserung zu erreichen. Außerdem ist ein solches Verfahren nur dort sinnvoll, wo Leichtölfelder am gleichen Ort existieren, oder eine nahegelegene Raffinerie niedrigviskose Benzinfraktionen zu liefern vermag.

Eine andere ebenfalls angewandte Methode besteht darin, dem Schweröl Wärme zuzuführen, um seine Viskosität abzusenken und entsprechend sein Fließvermögen zu verbessern, wozu beträchtliche Wärmemengen aufgewendet werden müssen. So ist es z. B. notwendig, ein Schweröl von 10.3° API, dessen Viskosität bei 20 °C 40 000 mPa s beträgt, auf eine Temperatur von ca. 95 °C zu erhitzen, um eine Viskosität von ca. 100 mPa•s zu erreichen, einen für den Öltransport in Rohrleitungen häufig geforderten Schwellenwert (M. L. Chirinos et al., Rev. Tec. Intevep 3 (2), 103 (1983). Dies bedeutet einen extremen Kostenaufwand für die Ausstattung und die Versorgung der Rohrleitungen und einen Verlust von 15 bis 20 % an Rohöl, da üblicherweise die notwendige Wärmemenge durch Verbrennen von Rohöl gewonnen wird.

Ein weiteres Verfahren des Schweröltransportes besteht darin, daß man das Öl in Form eine mehr oder minder leicht flüssigen Emulsion durch die Rohrleitungen pumpt. Da die Viskosität von Emulsionen ganz überwiegend von der des Dispersionsmittels bestimmt wird, handelt es sich hier um eine Öl-in-Wasser-Emulsion. Die Öl-in-Wasser-Emulsion wird erhalten, indem man dem Öl unter Anwendung von Scherkräften Wasser und Emulgator zusetzt und diese Mischung sodann in die Rohrleitung pumpt. In einem Absetztank, z. B. vor dem Eintritt in die Raffinerie, wird die Emulsion wieder in Öl und Wasser getrennt und das abgetrennte Öl der Raffinerie zugeführt. Der Emulgator soll in möglichst geringer Konzentration zu einer stabilen, leicht flüssigen Öl-in-Wasser-Emulsion mit sehr hohem Ölanteil führen, was naturgemäß hohe Anforderungen an die einzusetzenden Emulgatoren stellt. Hohe Scherkräfte sind bei der Emulgierung ebenfalls zu vermeiden, da die Gefahr einer Inversion zu einer bei Schwerölen extrem hochviskosen Waser-in-Öl-Emulsion besteht. Die Emulsionen sollen außerdem stabil sein sowohl gegenüber höheren Salinitäten, wie sie bei vielen Lagerstättensysteme auftreten, als auch gegenüber höheren Temperaturen. Trotz ausreichender Stabilität der Emulsionen beim Fluß durch die Rohrleitung sollen sie sich möglichst unproblematisch wieder trennen lassen. Unerwünscht sind schwefelhaltige Emulgatoren, wenn es nicht gelingt, sie bei der Spaltung in der wäßrigen Phase zu halten.

Die bisher vorgeschlagenen Emulgatoren erfüllen die genannten Bedingungen noch nicht hinreichend. In vielen Fällen (z. B. US-Patentschriften 4 285 356, 4 265 264 und 4 249 554) werden Emulsionen mit Ölgehalten von nur 50 % genannt, was bedeutet, daß für den eigentlichen Öltransport auf die Hälfte des Rohrleitungsvolumens verzichtet werden muß. In anderen Fällen (z. B. CA-Patentschriften 1 108 205, 1 113 529, 1 117 568 sowie US-Patentschrift 4 246 919) ist die mit dem Emulgatorzusatz erreichte Viskositätserniedrigung trotz des relativ kleinen Ölanteils zu gering. Und schließlich werden vielfach unerwünschte Emulgatoren auf Schwefelbasis eingesetzt.

Ferner offenbart die Europäische Patentanmeldung EP-A 0 175 879 mit Priorität 27.9.1984 (DE-A 3 435 430) ein Verfahren zum Transport von zähflüssigen Rohölen durch eine Rohrleitung, wobei eine Öl-in-wasser-Emulsion aus Rohöl und mindestens 10 bis 15% Wasser, das einen Emulgator enthält, hergestellt, durch die Leitung hindurchgeführt und anschließend wieder in Rohöl und Wasser getrennt wird. Dieses Verfahren ist dadurch gekennzeichnet, daß als Emulgator carboxymethyliertes Oxethylat der Formel

$$R{-}(O{-}CH_2CH_2)_n{-}O{-}CH_2{-}COOM$$

eingesetzt wird.

Dabei bedeuten R einen linearen oder verzweigten aliphatischen Rest mit 6 bis 20 Kohlenstoffatomten oder einen alkyl- oder dialkylaromatischen Rest mit 5 bis 16 Kohlenstoffatomen pro Alkylgruppe, n 1 bis 40 und M ein Alkali- oder Erdalkali-Metallion oder Ammonium.

Dieses Verfahren ist weiter dadurch gekennzeichnet, daß der Carboxymethylierungsgrad des carboxymethylierten Oxethylats 50%, vorzugsweise 85%, bis 100% und die Emulgatorkonzentration, bezogen auf die Ölmenge, 0,01 bis 0,5 Gewichtsprozent (100 bis 500 ppm) betragen.

Es bestand daher die Aufgabe, für die Emulgierung von Schweröl in Wasser zum Schweröltransport in Rohrleitungen Emulgatoren zu finden, die die erwähnten Nachteile nicht besitzen, sondern im wesentlichen dem oben beschriebenen Eigenschaftskatalog entsprechen.

Diese Aufgabe wird dadurch gelöst, daß man als Emulgatoren carboxymethylierte Oxalkylate der Formel

$$R{-}(OC_3H_6)_m(O{-}CH_2{-}CH_2)_n{-}O{-}CH_2{-}COOM,$$

in der R einen gesättigten oder ungesättigten linearen oder verzweigten aliphatischen Rest mit 6 bis 20

Kohlenstoffatomen, einen alkylaromatischen Rest mit 4 bis 16 Kohlenstoffatomen in der Alkylgruppe, einen dialkylaromatischen Rest mit zusammen 5 bis 20 Kohlenstoffatomen in den Alkylgruppen oder einen trialkylaromatischen Rest mit zusammen 7 bis 24 Kohlenstoffatomen in den Alkylgruppen, m 1 bis 30, vorzugsweise 2 bis 20, n 1 bis 40, vorzugsweise 3 bis 20, und M ein alkali- oder Erdalkali-Metallion oder Ammonium bedeuten, einsetzt.

Vorteilhaft stellt man die carboxymethylierten Oxalkylate durch Umsetzung der Oxalkylate der Formel

$R-(OC_3H_6)_m(O-CH_2CH_2)_nOH$

mit Chloressigsäure oder einem Salz der Chloressigsäure in Gegenwart von Alkalihydroxid oder Erdalkalihydroxid her. Aber auch andere Herstellungsverfahren sind geeignet. R bedeutet einen gesättigten oder ungesättigten, geradkettigen oder verzweigten Alkylrest mit 6 bis 20, vorzugsweise 8 bis 18 C-Atomen oder einen Alkylarylrest mit 4 bis 16, vorzugsweise 6 bis 14 C-Atomen in der Alkylgruppe oder einen Dialkylarylrest mit zusammen 5 bis 20, vorzugsweise 7 bis 18 Kohlenstoffatomen in den Alkylgruppen oder einen trialkylaromatischen Rest mit zusammen 7 bis 24, vorzugsweise 9 bis 22 Kohlenstoffatomen in den Alkylgruppen. Als Alkohole, deren Oxalkylate carboxymethyliert werden, lassen sich z. B. einsetzen: Hexylalkohol, Octylalkohol, 2-Ethylhexylalkohol, Nonylalkohol, Isononylalkohol, Decyl- und Undecylalkohol, Lauryl-, Tridecyl-, Myristil-, Palmityl- und Stearylalkohol, aber auch ungesättigte, wie z. B. Oleylalkohol. Zweckmäßig können handelsübliche Gemische dieser Alkohole sein. Als Alkylphenole lassen sich z. B. einsetzen: Pentylphenol, Hexylphenol, Octylphenol, Nonylphenol, Dodecylphenol, Hexadecylphenol sowie die entsprechenden Di- und Trialkylphenole.

Die Oxalkylierung der Alkohole oder Alkylphenole kann in Gegenwart katalytischer Mengen Alkalihydroxid mit 1 bis 30 Mol Propylenoxid/Mol Hydroxylverbindung und danach mit 1 bis 40 Mol Ethylenoxid/Mol durchgeführt werden. Bekanntlich sind jedoch auch andere Verfahren möglich. Die Carboxymethylate lassen sich aus den Oxalkylaten beispielsweise durch Umsetzung mit einem Salz der Chloressigsäure in Gegenwart von Alkali- oder Erdalkalihydroxid (DE-C 2 418 444) herstellen. Das Kation im carboxymethylierten Oxalkylat mit der Formel

$R-(OC_3H_6)_m(OC_2H_4)OCH_2-COOM$

kann Natrium, Kalium, Lithium, Ammonium, Calcium, Magnesium oder Wasserstoff sein.

Die verwendeten Emulgatoren sind überwiegend anionisch, so daß eine unproblematische Spaltung der durch sie stabilisierten Emulsion angenommen werden kann. Die Verbindungen sind thermisch stabil und in extrem weiten Grenzen verträglich mit Salzwasser (US-A 4 457 373). Weiterhin gestatten sie durch Variation des hydrophoben Alkylrestes, des Propoxylierungsgrades und des Oxethylierungsgrades eine optimale Anpassung des Emulgators an das zu transportierende Öl und an die gegebene Salinität des in den meisten Fällen aus der Lagerstätte mitgeförderten Wassers, das zweckmäßigerweise die wäßrige Phase der zu transportierenden Emulsion bildet.

Entsprechend ihrer Herstellung können die carboxymethylierten Oxalkylate nicht umgesetztes Oxalklat enthalten. Demgemäß läßt sich ein Carboxymethylierungsgrad definieren. Die Formel

$R-(OC_3H_6)_m(OC_2H_4)_n-O-CH_2COOM$

bezeichnet daher ein Gemisch mit unterschiedlichen Mengen an nicht umgesetztem Oxalkylat, sofern der Carboxymethylierungsgrad zwischen 40 und 100 %, vorzugsweise zwischen 50 und 100 %, liegt.

Besonders wirksam sind Gemische mit einem Carboxymethylierungsgrad zwischen 85 und 100 %. Derartige Gemische bestehen demnach aus anionischem und nichtionischem Tensid und werden als carboxymethylierte Oxalkylate gemäß der Erfindung betrachtet.

Die beschriebenen Gemische aus anionischem und nichtionischem Tensid oder die rein anionischen Verbindungen (Emulgator) sind in üblichen Lagerstättenwässern löslich oder zumindest problemlos dispergierbar.

In Vorversuchen kann der einzusetzende Emulgator entsprechend seiner chemischen Struktur auf das jeweils vorhandene Schweröl-Wasser-System optimal eingestellt werden.

Die Tenside (Emulgatoren) einer homologen Reihe (erhalten z. B. durch Variation des Propoxylierungsgrades, vgl. Tabelle A) werden z. B. in dem Lagerstättenwasser gelöst und mit dem betreffenden Schweröl vermischt und nach kurzzeitigem Rühren mit einem Flügelrührer ohne Anwendung hoher Scherkräfte auf ihre Emulgierwirkung geprüft, und es wird die Stabililtät der Emulsion festgestellt. Diese Beurteilung der Emulsion wird ca. 24 Stunden später wiederholt, und sodann wird gegebenenfalls die Viskosität in Abhängigkeit der Schergeschwindigkeit gemessen. Da Schwerölemulsionen z. T. etwas strukturviskos sind, wird für die Schergeschwindigkeit ein Bereich zwischen 10 und 100 $sec^{-1}$ gewählt, wie er etwa dem Transport durch Rohrleitungen entspricht. Ein Tensid ist dann ein optimaler Emulgator, wenn die zur Emulgierung notwendige Menge möglichst gering ist.

Die Emulgatormenge liegt im allgemeinen bei 0,01 bis 0,5, insbesondere bei 0,03 bis 0,2 Gewichtsprozent, bezogen auf die Ölmenge, das entspricht 100 bis 5 000, vorzugsweise 300 bis 2 000 ppm. Der Emul-

gator kann zur "Schwerölverflüssigung" entweder als Schmelzeoder als wäßrige Lösung bzw. als Dispersion der Öl-Wasser-Mischung, zudosiert, oder auch dem Wasser zugegeben werden, das dann mit dem Öl vermischt wird. Unter Wasser wird hier entweder ein mehr oder minder salzhaltiges Wasser verstanden, das gemeinsam mit dem Schweröl produziert wird, oder es kann ein wohlfeil zur Verfügung stehendes Oberflächenwasser oder schließlich auch ein Gemisch aus beiden Wässern sein. Da Schwerölfelder häufig durch Dampffluten ausgebeutet werden, kann die Salinität des produzierten Wassers etwas schwanken, was für das beanspruchte Verfahren nicht problematisch ist.

Statt den Emulgator in das Wasser zu dosieren, kann er auch dem Schweröl selbst zugefügt werden, zumal die hier beanspruchte Tensidklasse eine gute Öllöslichkeit zeigt. Unter Umständen kann es vorteilhaft sein, eine kleine Menge leichtflüssiges Kohlenwasserstoffgemisch als Lösevermittler zu verwenden. Die Vermischung der drei Komponenten zur Bildung der Emulsion, nämlich Öl, Wasser und Emulgator, kann entweder unmittelbar am Bohrloch oder in bzw. nahe einem Sammeltank oder an irgendeinem anderen Punkt des Rohrleitungssystems erfolgen.

Eine Variante des Verfahrens besteht darin, daß die Emulgatorflüssigkeit in den unteren Teil der Produktionsbohrung injiziert wird, um den Fluß des Schweröls in der Produktionsleitung zu erleichtern. Diese Methodik empfiehlt sich besonders bei einem niedrigen Gas-Öl-Verhältnis.

Das Mischungsverhältnis Öl zu Wasser kann in weiten Grenzen zwischen 10 : 90 und 90 : 10 schwanken. Aus wirtschaftlichen Gründen sind hohe Ölgehalte anzustreben, wobei zu berücksichtigen ist, daß sehr hohe Ölgehalte meist auch zu relativ hochviskosen Öl/Wasser-Emulsionen führen bzw. eine dringend zu vermeidende Phaseninversion begünstigen. Das wirtschaftliche Optimum liegt daher, je nach System, bei einem Ölgehalt zwischen 70 und 85 %. Die Emulgierung wird bekanntlich begünstigt durch Mischvorrichtungen, wie Rührwerke, Kreiselpumpen, Statikmixer usw., die im Bedarfsfall verwendet werden. Die derart gebildete Emulsion wird durch das Rohrleitungssystem gefördert, das Zwischenstationen und zwischengeschaltete Lagerbehälter enthalten kann. Am Rohrleitungsendpunkt wird die Emulsion in einem Separator in an sich bekannter Weise gespalten, wobei es von Vorteil sein kann, einen oder mehrere Dismulgatoren zuzusetzen.

Das so entwässerte Rohöl wird abgezogen und sodann entweder der Raffinerie oder einem eventuellen Weitertransport, z. B. per Schiff, zugeführt.

## Beispiele

In einem Glasgefäß oder Polyethylenbecher von ca. 200 ml Inhalt werden 75 g Schweröl und jeweils 25 g der genannten wäßrigen Tensidlösung, die außerdem noch Neutralelektrolyt enthält, bei Raumtemperatur mit einem einfachen Flügelrührer (ca. 100 Umdrehungen pro Minute) miteinander verrührt. Ist das hinzugefügte Tensid wirksam und seine Menge ausreichend, so ist eine einheitlich aussehende Emulsion entstanden. Sodann läßt man die Mischung ca. 24 Stunden bei Raumtemperatur stehen und untersucht erneut die Einheitlichkeit der Mischung, wobei - falls notwendig - ein wenig mit einem Glasstab gerührt wird. Hat sich eine leichtflüssige, einheitliche Emulsion gebildet, so wird die Viskosität - wie bereits geschildert - gemessen. Registriert wird die Mindestemulgatorkonzentration (Gewichtsprozent, bezogen auf die Ölmenge) des betreffenden Tensids, die zur Herstellung einer etwa stabilen Emulsion notwendig ist. "Etwa stabil" bedeutet hierbei, daß bereits geringfügiges Rühren mit dem Glasstab dazu ausreicht, die ursprüngliche Einheitlichkeit, falls diese überhaupt eingebüßt wurde, wieder herzustellen.

Als Schweröle wurden 2 venezolanische Rohöle eingesetzt: Boscan-Öl (ca. 10° API, Viskosität bei 20 °C 180 000 mPa s, Stockpunkt 7 °C) und CN-Öl (Ca. 8° API, Viskosität bei 20 °C ca. 3 000 000 mPa s, Stockpunkt 18 °C).

Anhand der in den folgenden Tabellen zusammengefaßten Beispiele wird die allgemein hohe Wirksamkeitder carboxymethylierten Oxalkylate als Schwerölemulgatoren für o/w-Emulsionen demonstriert. Es wird weiterhin gezeigt, daß sich die Wirksamkeit des Tensides mittels Variation der chemischen Struktur durch Veränderung des Propoxylierungsgrades (Tabellen A, C und D) bzw. des Oxethylierungsgrades (Tabelle B) optimieren läßt. Ein Vergleich der Tabellen A und D zeigt, daß die hohe Emulgierwirksamkeit bei beiden Ölen gegeben ist. Der Einfluß der Salinität in dem hier betrachteten Salinitätsbereich (20 000 bis 50 000 ppm) ist nicht besonders groß, wie der Vergleich der Tabellen C und D zeigt. Die Nützlichkeit der Einführung einer PO-Gruppe in das Emulgatormolekül wird in den Beispielen 20 und 21 gegenüber Beispiel 19 demonstriert.

Erfindungsgemäß zu emulgierende und zu transportierende Schweröle sind z. B. solche mit einem API unterhalb 18°.

Tabelle A

Mindestemulgatorkonzentration bei carboxymethylierten Nonylphenoloxalkylat-Natriumsalzen mit n = 6 (Mol Ethylenoxid/Mol; Carboxymethylierungsgrad ca. 75%) in Abhängigkeit des Propoxylierungsgrades, Boscan-Öl, Salinität des Wassers 50 000 ppm NaCl

| Beispiel Nr. | PO-Grad (Mol/Mol) | Mindestkonzentration (%) | Viskosität bei 20°C (mPa s) |
|---|---|---|---|
| 1 | 1 | 0,05 | 110 |
| 2 | 3 | 0,065 | 80 |
| 3 | 4 | 0,075 | 100 |
| 4 | 5 | 0,1 | 90 |
| 5 | 6 | 0,2 | 160 |
| 6 | 8 | >0,3 | – |

Tabelle B

Mindestemulgatorkonzentration bei carboxymethylierten Nonylphenoloxalkylat-Natriumsalzen mit n = 3 (Mol Propylenoxid/Mol; Carboxymethylierungsgrad ca. 75%) in Abhängigkeit des Oxethylierungsgrades, Boscan-Öl, Salinität 50 000 ppm NaCl

| Beispiel Nr. | EO-Grad (Mol/Mol) | Mindestkonzentration (%) | Viskosität bei 20°C (mPa s) |
|---|---|---|---|
| 7 | 3,5 | >0,5 | – |
| 8 | 4,5 | 0,3 | 460 |
| 9 | 5,2 | 0,15 | 160 |
| 10 | 5,5 | 0,1 | 130 |
| 11 | 6,0 | 0,065 | 80 |
| 12 | 12 | >0,4 | – |

Tabelle C

Mindestemulgatorkonzentration bei carboxymethylierten Nonylphenoloxalkylat-Natriumsalzen mit n = 6 (Mol Ethylenoxid/Mol; Carboxymethylierungsgrad ca. 75%) in Abhängigkeit des Propoxylierungsgrades, CN-Öl, Salinität 20 000 ppm NaCl

| Beispiel Nr. | PO-Grad (Mol/Mol) | Mindestkonzentration (%) | Viskosität bei 40°C (mPa s) |
|---|---|---|---|
| 13 | 1 | 0,05 | 60 |
| 14 | 3 | 0,05 | 70 |
| 15 | 4 | 0,075 | 70 |
| 16 | 5 | 0,075 | 60 |
| 17 | 6 | 0,1 | 70 |
| 18 | 8 | >0,2 | – |

Tabelle D

Mindestemulgatorkonzentration bei carboxymethylierten Nonylphenoloxalkylat-Natriumsalzen mit n = 6 (Mol Ethylenoxid/Mol; Carboxymethylierungsgrad ca. 75%) in Abhängigkeit des Propoxylierungsgrades, CN-Öl, Salinität 50 000 ppm NaCl

| Beispiel Nr. | PO-Grad (Mol/Mol) | Mindestkonzentration (%) | Viskosität bei 40°C (mPa s) |
|---|---|---|---|
| 19 | 0 | 0,075 | 100 |
| 20 | 1 | 0,040 | 80 |
| 21 | 3 | 0,050 | 90 |
| 22 | 4 | 0,1 | 80 |
| 23 | 5 | 0,2 | 160 |
| 24 | 6 | >0,2 | - |

**Patentansprüche**

1.Verfahren zum Transport von Schweröl durch eine Rohrleitung, wobei eine Öl-in-Wasser-Emulsion aus Rohöl, mindestens 10 bis 15 % Wasser und einem Emulgator hergestellt und durch die Leitung hindurchgeführt und anschließend wieder in Rohöl und Wasser getrennt wird,
dadurch gekennzeichnet,
daß als Emulgator carboxymethyliertes Oxalkylat der Formel

$$R\text{-}(O\text{-}C_3H_6)_m(OCH_2CH_2)_nOCH_2COOM$$

in der R einen gesättigten oder ungesättigten linearen oder verzweigten aliphatischen Rest mit 6 bis 20 Kohlenstoffatomen, einen alkylaromatischen Rest mit 4 bis 16 Kohlenstoffatomen in der Alkylgruppe, einen dialkylaromatischen Rest mit zusammen 5 bis 20 Kohlenstoffatomen in den Alkylgruppen oder einen trialkylaromatischen Rest mit zusammen 7 bis 24 Kohlenstoffatomen in den Alkylgruppen, m 1 bis 30, n 1 bis 40 und M ein Alkali- oder Erdalkali-Metallion oder Ammonium bedeuten, eingesetzt wird.

2.Verfahren nach Anspruch 1, dadurch gekennzeichnet, daß der Carboxymethylierungsgrad des carboxymethylierten Oxalkylats 50 bis 100 % beträgt.

3.Verfahren nach Anspruch 1, dadurch gekennzeichnet, daß der Carboxymethylierungsgrad des carboxymethylierten Oxalkylats 85 bis 100 % beträgt.

4.Verfahren nach den Ansprüchen 1 bis 3, dadurch gekennzeichnet, daß die Emulgatorkonzentration, bezogen auf die Ölmenge 0,01 bis 0,5 Gewichtsprozent (100 bis 5000 ppm) beträgt.

**Claims**

1. Process for transporting heavy oils through a pipeline, an oil-in-water emulsion being produced from crude oil, at least 10 to 15% of water and an emulsifier, conducted through the pipeline and subsequently again separated into crude oil and water, characterized in that a carboxymethylated oxalkylate of the formula

$$R\text{-}(O\text{-}C_3H_6)_m(OCH_2CH_2)_nOCH_2COOM$$

in which R denotes a saturated or unsaturated linear or branched aliphatic radical of 6 to 20 carbon atoms, an alkylaromatic radical having 4 to 16 carbon atoms in the alkyl group, a dialkylaromatic radical having a total of 5 to 20 carbon atoms in the alkyl groups or a trialkylaromatic radical having a total of 7 to 24 carbon atoms in the alkyl groups, m denotes 1 to 30, n denotes 1 to 40 and M denotes an alkali metal or an alkaline earth metal ion or ammonium is used as emulsifier.

2. Process according to claim 1, characterized in that the degree of carboxymethylation of the carboxymethylated oxalkylate is 50 to 100%.

3. Process according to claim 1, characterized in that the degree of carboxymethylation of the carboxymethylated oxalkylate is 85 to 100%.

4. Process according to claims 1 to 3, characterized in that the concentration of the emulsifier is 0.01 to 0.5% by weight (100 to 5000 ppm), based on the amount of oil.

**Revendications**

1. Procédé pour le transport de pétrole lourd à travers une canalisation, une émulsion huile-dans-l'eau, constituée de pétrole brut, d'au moins 10 à 15% d'eau et d'un émulsifiant, étant préparée, conduite à travers cette canalisation puis à nouveau séparée en pétrole brut et eau, caractérisée par le fait que l'on utilise comme émulsifiant un oxalcoylat carboxyméthylé de formule

$R-(O-C_3H_6)_m(OCH_2CH_2)_nOCH_2COOM$,

dans laquelle R représente un radical aliphatique linéaire ou ramifié, saturé ou insaturé, comportant de 6 à 20 atomes de carbone, un radical alkylaromatique comportant de 4 à 16 atomes de carbone dans le groupe alkyle, un radical dialkylaromatique comportant conjointement de 5 à 20 atomes de carbone dans les groupes alkyle, ou un radical trialkylaromatique comportant conjointement de 7 à 24 atomes de carbone dans les groupes alkyle, $\underline{m}$ a une valeur de 1 à 30, $\underline{n}$ a une valeur de 1 à 40, et M représente un ion de métal alcalin ou alcalino-terreux, ou de l'ammonium.

2. Procédé selon la revendication 1, caractérisé par le fait que le degré de carboxyméthylation de l'oxalcoylat carboxyméthylé est de 50 à 100%.

3. Procédé selon la revendication 1, caractérisé par le fait que le degré de carboxyméthylation de l'oxalkylat carboxyméthylé est de 85 à 100%.

4. Procédé selon les revendications 1 à 3, caractérisé par le fait que la concentration en émulsifiant, relativement à la quantité de pétrole, est de 0,01 à 0,5% en poids (100 à 5000 ppm).